# EUROPÄISCHE PATENTSCHRIFT

(11) **EP 1 505 880 B1**
(45) Veröffentlichungstag und Bekanntmachung des Hinweises auf die Patenterteilung: **23.09.2015**
(21) Anmeldenummer: 03749876.3
(22) Anmeldetag: 08.05.2003
(51) Int. Cl.: A23G 1/21, A23G 3/02, A23G 3/20, A23G 1/20, A23G 1/00, A23G 3/00, A23P 1/10, B29C 33/10

(54) **VERFAHREN ZUM HERSTELLEN VON VERZEHRGÜTERN MIT EINER ÄUSSEREN SCHALE**
METHOD FOR THE PRODUCTION OF EDIBLES COMPRISING AN OUTER SHELL
PROCEDE POUR FABRIQUER DES PRODUITS DE CONSOMMATION POSSEDANT UNE COQUE EXTERIEURE

(30) Priorität: 14.05.2002 DE 10221524
(43) Veröffentlichungstag der Anmeldung: 16.02.2005
(73) Patentinhaber: KMB Produktions AG, 8552 Felben (CH)
(72) Erfinder: KNOBEL, Guido, CH-8552 Felben (CH)
(74) Vertreter: Patentanwälte und Rechtsanwalt Weiß, Arat & Partner mbB
(86) Internationale Anmeldenummer: PCT/EP2003/004813
(87) Internationale Veröffentlichungsnummer: WO 2003/094626

(56) Entgegenhaltungen:
- EP-A- 0 945 069
- WO-A-95/00043
- WO-A-95/32633
- WO-A-97/49296
- DE-C- 122 020
- GB-A- 726 814
- GB-A- 996 995
- US-A- 3 045 284
- US-A- 5 074 778

## Beschreibung

Die Erfindung betrifft ein Verfahren zum Herstellen von Verzehrgütern nach den Merkmalen des Oberbegriffs des Anspruchs 1.

In der DE 197 20 844 C1 wird beispielsweise ein Verfahren und eine Vorrichtung zum Herstellen von Verzehrgütern mit einer äusseren Schale beschrieben, welche durch einen in eine Form eintauchenden temperierten Stempel fliessgepresst hergestellt wird, wobei der Taupunkt der das Verzehrgut umgebenden Atmosphäre unter der Temperatur des Stempels gehalten wird.

Bei diesem Verfahren ist es nicht möglich, die Schokoladenmasse so genau zu bestimmen, dass der Rand des Confiserieproduktes mit der Rand der Form abschliesst. Ferner bildet sich kein glatter, ebener Rand. Deshalb wird in der Regel etwas mehr Formmasse in eine Ausnehmung der Form eingegeben und damit ein überstehender Rand erzeugt. Dieser überstehende Rand muss nun wiederum entfernt werden, um einen glatten Rand des Confiserieproduktes zu erhalten.

Das Entfernen des Randes geschieht beispielsweise gemäss der EP 0 589 820 B1 dadurch, dass ein Messer entlang der Oberfläche der Form schabt und dabei auf den überstehenden Rand von der Seite her trifft und diesen überstehenden Rand abschält. Dieses Verfahren hat den Nachteil, dass beispielsweise bei noch zu warmer Formmasse der obere Rand nicht abgeschält wird, sondern schmiert. Ist die Formmasse inzwischen zu kalt, besteht die Gefahr, dass die Formmasse im Bereich des oberen Randes bricht und dadurch kein glatter Rand erzeugt wird.

Aus der US-A-1 647 944 ist wiederum ein Verfahren zum Herstellen eines Confiserieproduktes bekannt, bei dem jedem Stempel Schneidflügel zugeordnet sind. Diese Schneidflügel tauchen bereits beim Herstellen des Confiserieproduktes in den überstehenden Rand ein. Ist das Confiserieprodukt erkaltet, wird der Stempel mit den Flügeln gedreht, wobei diese den oberen Rand abschneiden.

Beispielsweise offenbart auch die EP 0 945 069 A2 ein Verfahren und eine Vorrichtung zum Herstellen einer Schale aus einer Schokoladenmasse. Dazu wird ein Stempel in eine Form, die mit Schokoladenmasse gefüllt ist, gedrückt. Überschüssige Masse wird entweder in extra gebildeten Räumen aufgenommen oder die Bildung von überschüssiger Masse durch Abschliessen des Formhohlraumes durch einen federgelagerten Druckring verhindert.

Der vorliegenden Erfindung liegt die Aufgabe zugrunde, ein Verfahren und eine Vorrichtung der o.g. Art zu entwickeln, mit welchem das Abtrennen der überschüssigen Masse von der eigentlichen Schale auf einfache aber saubere Art und Weise geschieht, so dass ein absolut glatter Schalenrand erzeugt wird.

Zur Lösung dieser Aufgabe führen, die Merkmale des kennzeichnenden Teils des Anspruchs 1.

Dies bedeutet, dass beim Absenken des Stempels in den Formraum die überschüssige Masse über den Formrand hinweggedrückt wird und diese überschüssige Masse von der eigentlichen Schale abgetrennt wird. Im letzen Stadium des Absenkens des Stempels erfolgt so gleichzeitig auch ein gewisses Nachdrücken auf die Schokoladenmasse, welche die Schale im Formraum ausbildet. Es wird gewährleistet, dass die Schokoladenmasse sich engstmöglich auch in allen Kanten und Ecken der Stempeloberfläche anpasst, so dass eine absolut glatte Schalenoberfläche und -innenfläche erzeugt wird.

Die überschüssige Masse ist bereits von der Schale getrennt, so dass sie nunmehr auf beliebige Art und Weise entfernt werden kann, ohne dass es zu einer Beschädigung der Schale kommt. Bevorzugt wird ein entsprechendes Werkzeug, wie beispielsweise ein Schaber oder ein Messer benutzt, um diese überschüssige Masse vom Formrand abzutrennen. Hierbei kann das Messer auch für unterschiedliche Schokoladenmassen, was deren Farbe und Zusammensetzung anbetrifft, benutzt werden, da dieses Messer nur mit der überschüssigen Masse in Berührung kommt und nicht mit der eigentlichen Schale.

Jedoch sind auch andere Möglichkeiten des Entfernens der überschüssigen Masse denkbar. Beispielsweise kann die Form getwistet werden, so dass die überschüssige Masse von der Form abspringt. Denkbar ist auch ein Vibrieren. Gemäss einem Ausführungsbeispiel des Verfahrens soll die überschüssige Masse von der Schale abgequetscht werden, d.h., der Rand des Stempels, der auf den Formrand auftrifft, ist flächig ausgebildet. Hierbei genügt bereits ein Rand von 0.5 mm bis 1 mm. Je dünner der Rand ist, um so besser. Der Rand kann sogar ähnlich einer Ringzacke eine Schneidenform aufweisen, so dass die überschüssige Masse nicht abgequetscht, sondern abgeschnitten wird.

In einem weiteren Ausführungsbeispiel der Erfindung soll der Stempel mit dem Formrand einen sich öffnenden Raum zur Aufnahme der überschüssigen Masse ausbilden. Zu diesem Zweck ist eine vom Formrand weg sich öffnende Schrägfläche am Stempel vorgesehen. Damit wird gewährleistet, dass die überschüssige Masse nicht zu weit über die Form fliesst und mit der Form eine zu grosse Haftfläche ausbildet. Ist die überschüssige Masse als dicker Wulst in dem sich öffnenden Raum angeordnet, ist die Haftfläche zur Form hin gering, so dass ein Abschlagen dieser überschüssigen Masse erleichtert ist.

Ferner schliesst an den Rand des Stempels zum Forminneren hin eine Schrägfläche an, die in eine die Schale ausformende Stempelfläche übergeht. Bevorzugt hat diese Schrägfläche eine Winkelstellung von etwa 45°. Sie überträgt diese Schräge auch auf den Randbereich der Schale, so dass hier eine relativ grosse Anlagefläche für einen Deckel ausgebildet wird, der zu einem späteren Zeitpunkt auf die Schale, nach dem Einfüllen einer Masse in die Schale, aufgebracht wird.

Welche geometrische Ausgestaltung die Form bzw. der Formraum und der Stempel haben, ist von untergeordneter Bedeutung. Alle geometrischen Ausgestaltungen sollen vom Erfindungsgedanken umfasst sein.

Ferner kann es sich bei der Form um eine Mehrfachform oder auch Einzelform handeln oder auch um eine Doppelform, z.B. zum Herstellen von schokoladeneiern, die aus zwei Schalenhälften zusammengesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen teilweise dargestellten Querschnitt durch eine erfindungsgemässe Vorrichtung zum Herstellen von Schokoladenschalen;
Figur 2a) bis d) verschiedene Verfahrensstufen des Herstellens von Schokoladenschalen mit Teilen der Vorrichtung gemäss Figur 1;
Figur 3 einen vergrösserten Teilquerschnitt durch ein weiteres Ausführungsbeispiel eines erfindungsgemässen Stempels;
Figur 4 einen Querschnitt durch einen Teil der Vorrichtung entsprechend Figur 1 mit einer Einzelform.

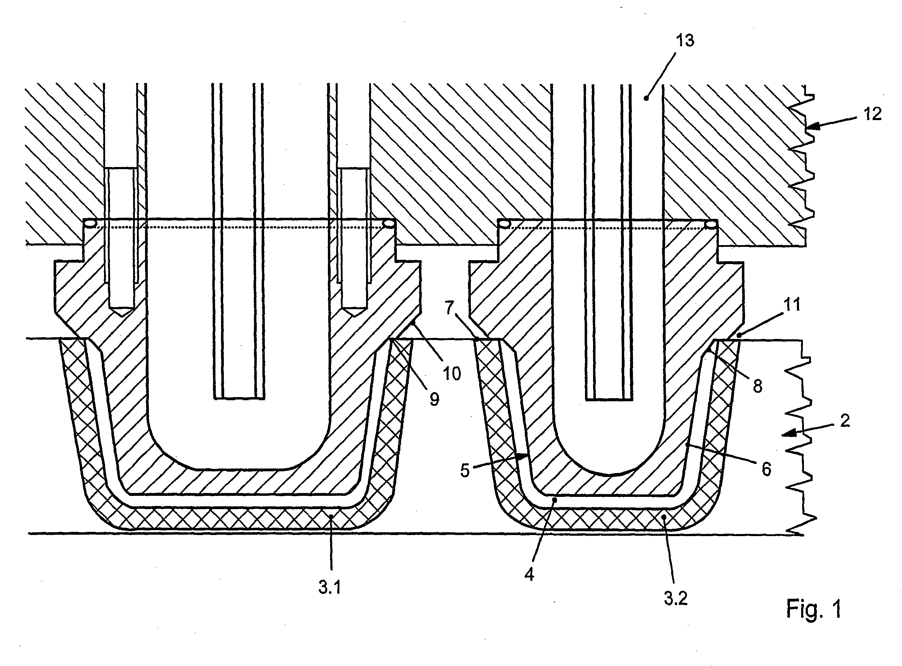

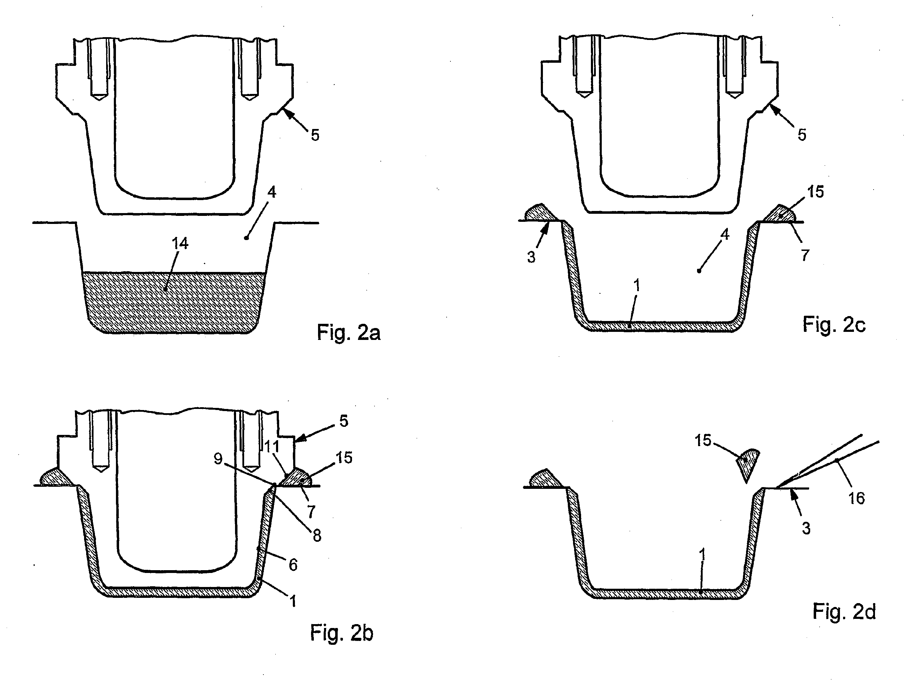

Von einer Vorrichtung zum Herstellen von Schokoladenschalen 1 (siehe Figur 2) ist in Figur 1 eine Mehrfachform 2 gezeigt, bei der zwei Formen 3.1 und 3.2 nebeneinanderliegen. Diese Formen 3.1 und 3.2 bilden Formräume 4 zur Aufnahme einer Schokoladenmasse aus. In den Formraum 4 taucht ein temperierter Stempel 5 ein, der eine Stempelfläche 6 besitzt, an die zu einem Formrand 7 hin eine Schrägfläche 8 anschliesst, die in einen Rand 9 übergeht. In der in Figur 1 gezeigten Gebrauchslage, in welcher die Schokoladenschale 1 ausgeformt wird, liegt der Rand 9 auf dem Formrand 7 auf.

An den Rand 9 schliesst eine weitere Schrägfläche 10 an, die zusammen mit dem Formrand 7 einen sich öffnenden Raum 11 ausbildet.

Der Stempel 5 befindet sich zusammen mit weiteren Stempeln an einer Tragplatte 12. In der Tragplatte 12 und ggf. auch im Stempel 5 befinden sich Kanäle 13 zum Führen eines Kühlmediums.

Die Funktionsweise der vorliegenden Erfindung wird anhand von Figur 2 näher erläutert:
In der Verfahrensstufe a) ist bereits Schokoladenmasse 14 in dem Formraum 4 eingegeben, der Stempel 5 befindet sich über diesem Formraum 4.
In der Verfahrensstufe b) wird der Stempel 5 abgesenkt, wobei die Stempelfläche 6 in den Formraum 4 eintritt, ebenso auch die Schrägfläche 8. Dabei wird überschüssige Masse 15 aus dem Formraum 4 herausgedrückt und gelangt auf den Formrand 7. Im letzten Stadium des Absenkens des Stempels 5 trifft der Rand 9 auf den Formrand 7 und quetscht die überschüssige Masse 15 von der Schokoladenschale 1 ab. Diese überschüssige Masse 15 liegt in dem Raum 11, der von der Schrägfläche 10 und dem Formrand 7 gebildet wird.

In dem Verfahrensschritt c) wird der Stempel 5 wieder angehoben. Da die Schokoladenschale 1 durch Kontakt mit dem temperierten Stempel 5 bereits formstabil geworden ist, verbleibt sie in dieser Form im Formraum 4. Ebenso verbleibt die überschüssige Masse 15 auf dem Formrand 7, wobei jetzt die gesamte Form 3 bevorzugt weiter gekühlt wird.

In dem Verfahrensschritt d) wird die überschüssige Masse 15 durch ein beliebiges Werkzeug 16 von der Form 3 abgeschabt. Bei dem Werkzeug 16 kann es sich um einen Schaber, Spachtel, Messer od. dgl. handeln. In machen Fällen kann es auch genügen, wenn die Form 3 vibriert oder getwistet wird.

Die Schokoladenschale 1 wird beispielsweise durch Umdrehen der Form 3 aus dem Formraum 4 genommen oder geschüttelt. In der Regel wird das Innere der Schale mit einer weiteren Masse gefüllt und die Schale mit einem Deckel verschlossen. Der Deckel liegt der Schrägfläche 8 an, wobei hier eine gute Haftung erzielt wird, da infolge der Schrägfläche der Deckel ebenfalls flächig der Schale 1 anliegt.

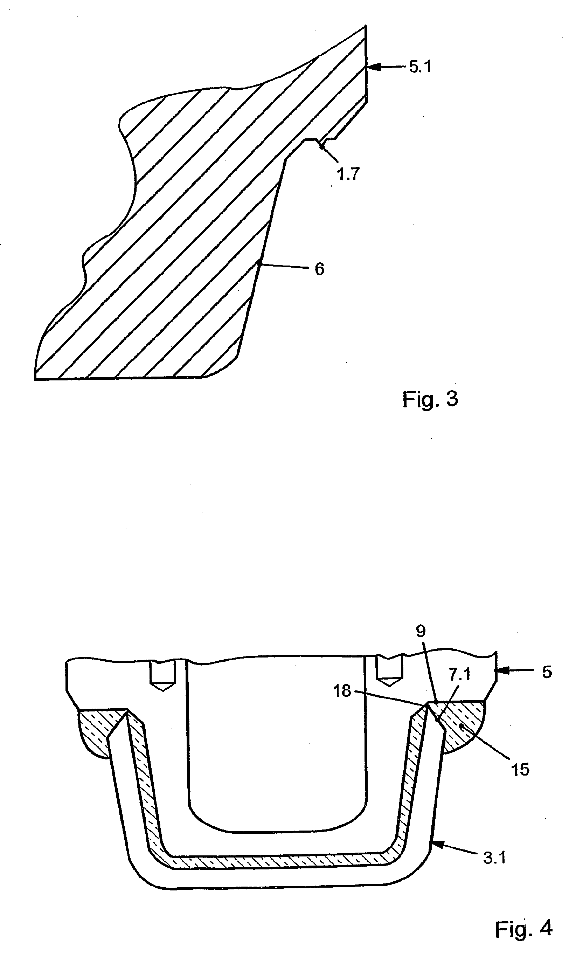

In Figur 3 ist erkennbar, dass ein Rand eines Stempels 5.1 als eine Schneide 17 ausgebildet ist. Ist der Stempel beispielsweise rund, so bildet diese Schneide 17 eine Ringzacke. Hierdurch erfolgt kein Abquetschen der überschüssigen Masse 15, sondern ein Abtrennen. Das Abtrennen geschieht bevorzugt exakt an der Übergangskante zwischen Formrand 7 und Formraum 4.

Beispielsweise zum Herstellen von Schokoladeneiern werden auch Einzelformen 3.1 benutzt, wie sie in Figur 4 dargestellt sind. Diese Einzelformen 3.1 sind über Gitterstäbe miteinander verbunden. Bei diesen Einzelformen 3.1 ist ein Formrand 7.1 schräg ausgestaltet und bildet zum Formraum 4 hin eine scharfe Kante 18 aus. Beim Auftreffen des Randes 9 auf die scharfe Kante 18 wird die überschüssige Masse 15 quasi abgeschnitten.

**Positionszahlenliste**

| | | | | | |
|---|---|---|---|---|---|
| 1 | Schokoladenschale | 34 | | 67 | |
| 2 | Mehrfachform | 35 | | 68 | |
| 3 | Form | 36 | | 69 | |
| 4 | Formraum | 37 | | 70 | |
| 5 | Stempel | 38 | | 71 | |
| 6 | Stempelfläche | 39 | | 72 | |
| 7 | Formrad | 40 | | 73 | |
| 8 | Schrägfläche | 41 | | 74 | |
| 9 | Rand | 42 | | 75 | |
| 10 | Schrägfläche | 43 | | 76 | |
| 11 | Raum | 44 | | 77 | |
| 12 | Tragplatte | 45 | | 78 | |
| 13 | Kanal | 46 | | 79 | |
| 14 | Schokoladenmasse | 47 | | | |
| 15 | Überschüssige Masse | 48 | | | |
| 16 | Werkzeug | 49 | | | |
| 17 | Schneide | 50 | | | |
| 18 | Kante | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Herstellen von Verzehrgütern mit einer äusseren Schale (1) aus einer Masse, die in einen Formraum (4) einer Form (3) eingegeben wird, in welcher dann ein temperierter Stempel (5, 5.1) mit einer Stempelfläche (6) eintaucht, wobei überschüssige Masse (15) über einen Formrand (7, 7.1) austritt,
**dadurch gekennzeichnet,**
**dass** beim Absenken des Stempels (5, 5.1) in den Formraum (4) die überschüssige Masse (15) über den Formrand hinweggedrückt und am Formrand (7, 7.1) von der Schale (1) mittels des Stempels (5, 5.1) abgetrennt wird und eine an einen Rand (9) des Stempels (5, 5.1) zum Forminneren hin anschliessende und in die die Schale ausformende Stempelfläche (6) übergehende Schrägfläche (8)ihre Schräge auf einen Randbereich der Schale (1) überträgt.

2. Verfahren nach Anspruch 1, **dadurch gekennzeichnet, dass** die überschüssige Masse (15) von der Schale (1) abgequetscht wird.

3. Verfahren nach Anspruch 1, **dadurch gekennzeichnet, dass** die überschüssige Masse (15) von der Schale (1) abgeschnitten wird.

4. Verfahren nach einem der Ansprüche 1 bis 3, **dadurch gekennzeichnet, dass** der Stempel (5, 5.1) mit dem Formrand (7, 7.1) einen sich öffnenden Raum (11) zur Aufnahme der überschüssigen Masse (15) ausbildet.

## Claims

1. A method of producing edible products with an outer shell (1) from a mass which is put into a mould cavity (4) of a mould (3) in which a temperature-controlled stamp (5, 5.1) then plunges with a stamp surface (6), wherein surplus mass (15) issues over a mould edge (7, 7.1),
**characterized in that**
upon lowering of the stamp (5, 5.1) into the mould cavity (4), the surplus mass (15) is pushed away over the mould edge and at the mould edge (7, 7.1) is separated from the shell (1) by means of the stamp (5, 5.1) and an inclined surface (8), adjoining an edge (9) of the stamp (5, 5.1) towards the mould interior and becoming the stamp surface (6) which shapes the shell (1), transfers its incline onto an edge region of the shell (1).

2. A method according to claim 1, **characterized in that** the surplus mass (15) is squeezed out from the shell (1).

3. A method according to claim 1, **characterized in that** the surplus mass (15) is cut off from the shell (1).

4. A method according to any one of claims 1 to 3, **characterized in that** the stamp (5, 5.1) forms, with the mould edge (7, 7.1), an opening cavity (11) to receive the surplus mass (15).

## Revendications

1. Procédé de fabrication de produits de consommation avec une coque extérieure (1) réalisée en une masse qui est introduite dans une cavité (4) d'un moule (3) dans lequel plonge ensuite un poinçon thermostatisé (5, 5.1) avec une surface de poinçon (6), la masse en excès (15) sortant par-dessus un bord de moule (7, 7.1),
**caractérisé par le fait**
**que**, lors de la descente du poinçon (5, 5.1) dans la cavité de moule (4), la masse en excès (15) est repoussée par-dessus le bord de moule et est séparée, au bord de moule (7, 7.1), de la coque (1) au moyen du poinçon (5, 5,1) et qu'une face oblique (8) se raccordant à un bord (9) du poinçon (5, 5,1) vers l'intérieur de moule et se confondant avec la surface de poinçon (6) formant la coque transmet sa pente à une zone de bord de la coque (1).

2. Procédé selon la revendication 1, **caractérisé par le fait que** la masse en excès (15) est séparée de la coque (1) par écrasement.

3. Procédé selon la revendication 1, **caractérisé par le fait que** la masse en excès (15) est coupée de la coque (1).

4. Procédé selon l'une quelconque des revendications 1 à 3, **caractérisé par le fait que** le poinçon (5, 5.1) forme avec le bord de moule (7, 7,1) un espace (11) s'ouvrant pour recevoir la masse en excès (15).
